## Europäisches Patentamt

## European Patent Office

## Office européen des brevets

(11) Veröffentlichungsnummer: **0 183 919**

**B1**

(12) **EUROPÄISCHE PATENTSCHRIFT**

(51) Int. Cl.⁴: **G 01 D 5/22, F 15 B 15/28**

(45) Veröffentlichungstag der Patentschrift:
**29.03.89**

(21) Anmeldenummer: **85110656.7**

(22) Anmeldetag: **24.08.85**

(54) Ventil mit einer Schaltungsanordnung zur Bestimmung der Ventilstellung.

(30) Priorität: **10.10.84 DE 3437150**

(43) Veröffentlichungstag der Anmeldung:
**11.06.86 Patentblatt 86/24**

(45) Bekanntmachung des Hinweises auf die Patenterteilung:
**29.03.89 Patentblatt 89/13**

(84) Benannte Vertragsstaaten:
**DE FR GB IT**

(56) Entgegenhaltungen:
**DE-A-2 844 010**
**DE-A-2 905 909**

(73) Patentinhaber: **ROBERT BOSCH GMBH, Postfach 50, D-7000 Stuttgart 1 (DE)**

(72) Erfinder: **Leutner, Volkmar, Dipl.- Ing., Birchbuschstrasse 11, D-7251 Friolzheim (DE)**
Erfinder: **Pfuhl, Berthold, Graf- Hartmann- Strasse 59/1, D-7145 Margröningen (DE)**
Erfinder: **Schempp, Roland, Ing., Salzäckerstrasse 28, D-7143 Vaihingen/Enz (DE)**

EP 0 183 919 B1

## Beschreibung

### Stand der Technik

Die Erfindung geht aus von einem Ventil nach der Gattung des Hauptanspruchs. Ventile, deren Kolben in Abhängigkeit von der Ventilstellung verschiebbar sind und bei denen der Kolben auf Spulen Einfluß nimmt, sind bereits allgemein bekannt. Bei diesen bekannten Ventilen erfolgt die Auswertung auf analoger Basis, wobei dann, wenn ein digitales Signal benötigt wird, ein Analog-Digital-Wandler nachgeschaltet ist. Dieses Verfahren ist einerseits recht umständlich und insbesondere bei Temperaturschwankungen aufgrund von Referenzwertveränderungen relativ ungenau. Zudem sind die bekannten Vorrichtungen recht kostenaufwendig

Aus der DE-A-2 844 010 ist ein Detektor für lineare Verstellungen bekannt, bei der die Position eines von Spulen umgebenen Magneten mittels eines Taktgenerators und eines Zählers bestimmt wird. Das Ansteuersignal für die Spulen ist jedoch vom Taktgenerator völlig entkoppelt, weshalb Frequenzschwankungen, die am Taktgenerator auftreten können, zu entsprechenden Verfälschungen des Meßergebnis führen. Weiterhin ist aus der DE-A-2 905 909 ein Gerät zum Messen von kurzen Strecken bekannt, welches ebenfalls induktive Geber verwendet. Dieses Gerät ist sehr aufwendig, wobei die unterschiedliche Stellung einer Achse in elektrische Impulse umgesetzt wird, die sich proportional zur Stellung der Achse verändern. Das Gerät ist nur für sehr kleine Wegstrecken geeignet, weshalb sein Anwendungsgebiet die Wegetechnik ist.

### Vorteile der Erfindung

Das erfindungsgemäße Ventil mit den kennzeichnenden Merkmalen des Hauptanspruchs hat demgegenüber den Vorteil, daß auf einfache Art und Weise ein digitales Ausgangssignal über die Ventilstellung gewonnen wird, das leicht mittels eines Rechenbausteines weiterverarbeitbar ist. Digitale Meß- und Regelvorrichtungen sind daher an das erfindungsgemäße Ventil leicht anzuschliessen. Dabei ist es günstig, einen Start-Stop-Zähler vorzusehen, in den während der Schaltzeitdifferenz der Takt eines Taktgenerators eingezählt wird, da dadurch auf einfache Art und Weise eine hohe Auflösung der Torzeit realisiert wird, wobei am Ausgang des Zählers seriell oder parallel die Schaltzeit als digitales Datenwort abgreifbar ist. Zur Erzielung einer hohen Auflösung ist es dabei zweckmäßig, einen Taktgenerator hoher Frequenz zu verwenden, dessen Taktsignale für die Speisung der Spulen mittels eines Teilers heruntergeteilt werden. Beispielsweise temperaturabhängige oder alterungsbedingte Frequenzverwerfungen des Generators lassen sich dabei in ihrem Einfluß weitgehend eliminieren, da bei einer geänderten Taktfrequenz für den Zähler auch eine geänderte Taktfrequenz zur Spulenansteuerung Verwendung findet.

Durch die in den Unteransprüchen aufgeführten Maßnahmen sind vorteilhafte Weiterbildungen und Verbesserungen des im Hauptanspruch angegebenen Ventils möglich. Besonders vorteilhaft ist es, an die Spulen je einen Widerstand anzuschließen, an denen der Spulenstrom als Spannung abgreifbar ist. Dies ermöglicht es, die relativ schwierige Strommeßung in eine Spannungsmeßung umzuformen, da eine Spannungsmeßung einfacher und präziser durchzuführen ist. Als Schaltvorrichtungen sind besonders vorteilhaft Komparatoren geeignet. Die Torzeitbildung erfolgt besonders einfach mittels eines Exklusiv-ODER-Gliedes.

Es ist ebenfalls vorteilhaft, die Ausgänge der Schaltvorrichtung einer Richtungserkennung zuzuführen. Dadurch ist es möglich, auf einfache Art und Weise festzustellen, in welcher Richtung das Ventil aus seiner Ruhelage verschoben ist. Dies ist insbesondere bei den Ventilen vorteilhaft, die von ihrer Ruhelage aus in zwei Richtungen zu bewegen sind. Die Richtungserkennung ist am einfachsten mittels eines Flip-Flops ausgebildet, wobei der Ausgang der einen Schaltvorrichtung dynamisch den Takteingang und der Ausgang der anderen Schaltvorrichtung dem Setzeingang des Flip-Flops zugeführt ist. Dies führt zu einer besonders einfachen Ausführung des Schaltungsaufbaus.

### Zeichnung

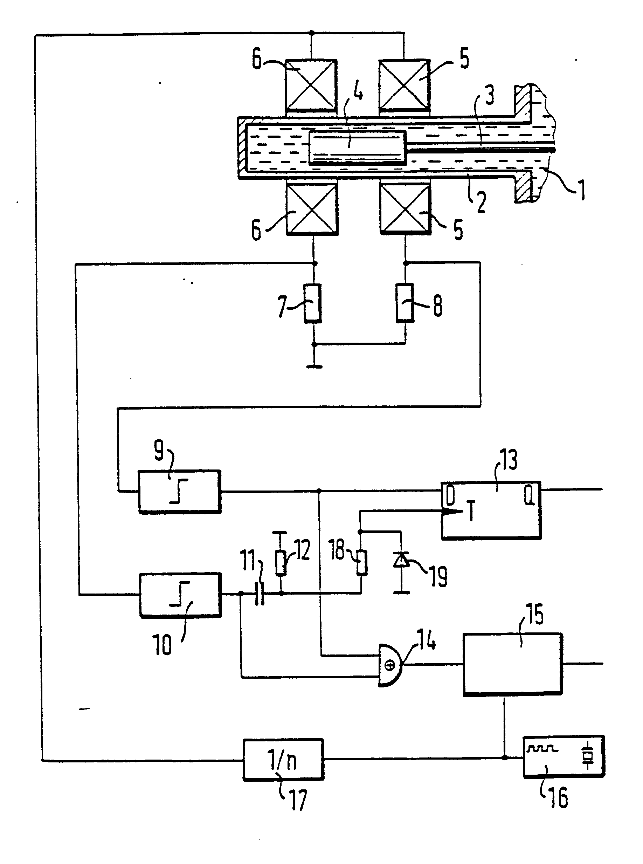

Ein Ausführungsbeispiel der Erfindung ist in der Zeichnung dargestellt und in der nachfolgenden Beschreibung näher erläutert.

### Beschreibung des Ausführungsbeispiels

Die Figur zeigt ausschnittsweise den der Wegmessung dienenden Teil 1 eines nicht näher dargestellten, an sich bekannten Ventils. Mit 2 ist das Druckrohr bezeichnet, welches das Druckmedium einschließt. Bei dem Ventil kann es sich beispielsweise um ein hydraulisches oder ein pneumatisches Ventil handeln. Mit dem nicht näher dargestellten Ventilschieber ist eine Stange 3 verbunden, an die sich ein Kolben 4 anschließt. Der Kolben 4 ist als Wegaufnehmerkern ausgebildet. Im Einflußbereich des Kolbens 4 befindet sich außerhalb des Druckrohres eine Spule 5 und eine Spule 6, die beide auf das Druckrohr aufgesteckt sind. Jeweils ein Anschluß der Spulen 5 und 6 sind mit dem Ausgang eines Teilers 17 verbunden. Der Eingang des Teilers steht mit einem Taktgenerator 16 in Verbindung, der Rechteckimpulse liefert. Der weitere Anschluß der Spule 5 ist über einen Widerstand 8 und der weitere Anschluß der Spule 6 über einen Widerstand 7 an die Masse geführt. Vom Verknüpfungspunkt der Spule 6 und dem Widerstand 7 führt eine Leitung zu einem Komparator 10. Ebenso führt eine Leitung zu einem Komparator 9. Die Leitung ist am Verknüpfungspunkt zwischen der Spule 5 und dem Widerstand 8 angeschlossen. Der Ausgang des Komparators 9 steht einerseits mit einem Eingang des Exklusiv-ODER-Gliedes 14 und andererseits mit dem Setzeingang D eines D-Flip-Flops 13 in verbindung. Der Ausgang des Komparators 10 ist mit dem weiteren Eingang des Exklusiv-ODER-Gliedes Verbunden und des weiteren zu einem Kondensator 11 geführt. Der weitere Anschluß des Kondensators 11 führt über einen Widerstand 18 zum Takteingang des Flip-Flops 13. An den Takteingang des Flip-Flops 13 ist des weiteren eine Diode 19 angeschlossen, die gegen Masse geführt ist. Ebenso ist zwischen Kondensator 11 und Widerstand 18 ein Widerstand 12 angeschlossen, der ebenfalls zur Masse geführt ist. Der Ausgang des Exklusiv-ODER-Gliedes 14 steht mit dem Start-Stop-Eingang eines Zählers 15 in Verbindung. Des weiteren ist der Takteingang des Zählers 15 mit dem Ausgang des Taktgenerators 16 verbunden. Am Ausgang des Zählers ist je nach Wahl des Zählerbaustein in serieller oder paralleler Form das Zählergebnis zwischen dem Start- und dem Stop-Signal abgreifbar. Dieses Zählergebnis kann einer digitalen Auswerteschaltung oder einem Rechner zugeführt werden. Digitale Regelbausteine sind direkt mit diesem Ausgangssignal zu beaufschlagen. Am Ausgang Q des Flip-Flops 13 ist des weiteren ein Richtungssignal abgreifbar. Dieses Richtungssignal gibt an, in welcher Richtung der Kolben 4 aus seiner Ruhelage zwischen den beiden Spulen 5 und 6 verschoben ist.

**Die Wirkungsweise des Ventils ist folgende:**

Durch den Taktgenerator 16 und den Teiler 17 werden Taktimpulse generiert, die den Spulen 5 und 6 zugeführt werden. Diese Taktimpulse bewirken in der Spule einen e-förmig ansteigenden Spulenstrom. Dieser Spulenstrom wird jeweils durch die Widerstände 7 und 8 in eine Spannung umgewandelt. Die Phasenverschiebung der beiden Spannungen zueinander ist ein Maß für die Kernstellung des Kolben 4 außerhalb von der Mitte zwischen den beiden Spulen. Diese Phasenverschiebung wird durch die Komparatoren 9 und 10 erfaßt, die bei einer bestimmten vorgegebenen Schaltschwelle umschalten. Da der Anstieg des Spulenstromes induktivitätsabhängig ist und die Induktivität wiederum durch die Stellung des Kolbens 4 beeinflußt wird, schalten die Komparatoren 9 und 10 gleichzeitig, wenn sich der Kolben genau in der Mitte zwischen den beiden Spulen befindet oder zu unterschiedlichen Zeitpunkten, wenn der Kolben und damit der Steuerschieber aus seiner Ruhestellung verschoben ist. Die sich im letzteren Fall ergebende Torzeit wird durch das Exklusiv-ODER-Glied 14 gebildet, das beispielsweise bei verschiedenen Komparatorausgangssignalen an seinem Ausgang eine logische 1 abgibt. Solange das Exklusiv-ODER-Glied 14 an seinem Ausgang eine logische 1 abgibt , werden in den Zähler 15 die Taktimpulse des Generators 16 eingezählt. Wird der Zähler 15 gesperrt, weil nunmehr beide Komparatoren das gleiche Signal haben, so ist am Ausgang des Zählers 15 in serieller oder paralleler Form ein digitales Signal abgreifbar, das genau der Kolbenstellung entspricht.

Beim gezeigten Ausführungsbeispiel ist es aufgrund des Zählerstandes nicht möglich zu erkennen, ob der Kolben 4 nach links oder rechts aus seiner Ruhelage verschoben ist. Dies wird durch das Flip-Flop 13 erkannt. Das Flip-Flop 13 erlaubt eine Beurteilung darüber, ob zuerst der Komparator 9 oder zuerst der Komparator 10 geschaltet hat. Bei eine ansteigenden Flanke des Komparators 10 wird durch die Schaltungsanordnung mit den Bauteilen 11, 12, 18 und 19 ein kurzer dynamischer Rechteckimpuls gebildet, der dem Takteingang T des Flip-Flops 13 zugeführt wird. Bei diesem Signal wird das Signal am Eingang D des Flip-Flops an den Ausgang Q übernommen. Hat nunmehr der Komparator 9 früher geschaltet, liegt dort eine logische 1 an, die an den Ausgang übernommen wird. Schaltet der Komparator 9 später als der Komparator 10, liegt die logische 1 zum Taktzeitpunkt nicht an, so daß eine logische 0 übernommen wird. Dieses Richtungssignal ist ohne weiteres bei einem parallelen Ausgangssignal des Zählers 15 als zusätzliches Informationsbit der digitalen Ausgangsinformation zuführbar.

Durch die Verwendung des gleichen Taktgenerators 16 so wohl für den Zähler 15 als auch zur Speisung der Spulen 5 und 6 wird erreicht, unter Zwischenschaltung eines Teilers 17, daß Frequenzänderungen des Generators 16 in geringem Umfang kaum zu einer Verfälschung des Meßergebnisses führen. Frequenzänderungen des Oszillators 16 verursachen keinen Fehler in der Auswertung, lediglich die Steigung der Kennlinie der Anordnung verändert sich frequenzabhängig. Der 0-Punkt jedoch bleibt konstant und wird nicht beeinflußt. Dieses reduziert den Einfluß eines Temperaturfehlers oder Alterungserscheinungen des Taktgenerators.

Das gezeigte Ausführungsbeispiel hat den Vorteil, daß es einen sehr großen Linearitätsbereich aufweist und die Mittelstellung eindeutig definiert ist. Neben der Verwendung eines Rechtecksignals kann die Versorgung der Spulen auch mit einem Sinus- oder Dreiecksignal erfolgen. Ein eventuell auftretender Gleichanteil hat keine Auswirkungen auf das Meßergebnis. Insbesondere entfällt die bisher bei der analogen Kolbenstellungsmessung erforderliche Konstanz des Referenzspannungspegels.

In einer vereinfachten Ausführungsform ist es durchaus möglich, auch mit einer einzigen Spule die Kolbenstellung zu bestimmen. Hierbei wird dann das Impulspausenverhältnis am Ausgang eines Komparators mittels des Zählers 15 ausgewertet. Die Mittelstellung ist dann bei einem bestimmten vorgegebenen Impulspausenverhältnis gegeben, das mittels des Zählers auszählbar ist. Ein vorgegebener Zählerstand entspricht dann einem bestimmten Impulspausenverhältnis. Bei einer Verschiebung des Kolbens 4 ändert sich das Impulspausenverhältnis, so daß die Impulsdauer bei einem konstanten Takt für die Spulen ein Maß für die Stellung des Kolbens ist. Eine Richtungserkennung ist dann nicht mehr erforderlich.

## Patentansprüche

1. Ventil mit einer Schaltungsanordnung zur Bestimmung der Ventilstellung mit einem in Abhängigkeit von der Kolbenstellung verschiebbaren Wegaufnehmerkern (4), der auf jeweils eine am Druckrohr (2) im Einflußbereich des Wegaufnehmerkerns angebrachte Spule (5, 6) einwirkt, wobei der Spulenstrom der mittels Impulsen angesteuerten Spulen (5, 6) gemessen wird und in Abhängigkeit des Meßwertes Schaltvorrichtungen (9, 10) betätigt werden, deren Schaltzeitdifferenz durch Zählen der Taktimpulse eines Taktgenerators (16) in einem Zähler (15) als Maß für die Ventilstellung ermittelt wird, dadurch gekennzeichnet, daß der Taktgenerator (16) sowohl an den Zähler (15) als auch an einen Teiler (17) angeschlossen ist, dessen Ausgangssignal die Spulen (5, 6) mit reduzierter Taktfrequenz speist, und daß die Schaltzeitdifferenz dem als Start-Stop-Zähler (15) ausgebildeten Zähler zugeführt ist, in dem während der Schaltzeitdifferenz der Takt des Taktgenerators (16) gezählt wird.

2. Ventil nach Anspruch 1, dadurch gekennzeichnet, daß an die Spulen (5, 6) je ein Widerstand (7, 8) angeschlossen ist, an denen der Spulenstrom als Spannung abgreifbar ist.

3. Ventil nach Anspruch 2, dadurch gekennzeichnet, daß die Schaltvorrichtungen als Komparatoren (9, 10) ausgebildet sind.

4. Ventil nach einem der vorhergehenden Ansprüche, dadurch gekennzeichnet, daß den Schaltvorrichtungen (9, 10) ein Exklusiv-ODER-Glied (14) nachgeschaltet ist.

5. Ventil nach einem der vorhergehenden Ansprüche, dadurch gekennzeichnet, daß die Ausgänge der Schaltvorrichtung (9, 10) einer Richtungserkennung (13) zugeführt sind.

6. Ventil nach Anspruch 5, dadurch gekennzeichnet, daß die Richtungserkennung als Flip-Flop (13) ausgebildet ist, wobei der eine Ausgang der Schaltvorrichtung (10) dynamisch dem Takteingang und der Ausgang der anderen Schaltvorrichtung (9) dem Setzeingang des Flip-Flops zugeführt ist.

## Claims

1. Valve comprising a circuit arrangement for determination of the position of said valve, with a displacement pickup core (4) which can be displaced in dependence on the piston position and which acts on in each case one coil (5, 6) attached to the pressure tube (2) within the range of influence of the displacement pickup core, in which arrangement the coil current of the coils (5, 6) driven by means of pulses is measured and switching devices (9, 10) are operated in dependence on the measurement value, the switching time difference of which devices is determined by counting the clock pulses of a clock generator (16) in a counter (15) as a measure of the valve position, characterized in that the clock generator (16) is connected both to the counter (15) and to a divider (17) the output signal of which feeds the coils (5, 6) with reduced clock frequency, and that the switching time difference is supplied to the counter which is constructed as a start/stop counter (15) and in which the clock of the clock generator (16) is counted during the switching time difference.

2. Valve according to claim 1, characterized in that a resistor (7, 8), across which the coil current can be picked up as a voltage, is connected to each of the coils (5, 6).

3. Valve according to claim 2, characterized in that the switching devices are constructed as comparators (9, 10).

4. Valve according to one of the preceding claims, characterized in that the switching devices (9, 10) are followed by an exclusive OR section (14).

5. Valve according to one of the preceding claims, characterized in that the outputs of the switching device (9, 10) are supplied to a direction detecting circuit (13).

6. Valve according to claim 5, characterized in that the direction detecting circuit is constructed as a flip flop (13), one output of the switching device (10) being dynamically supplied to the clock input and the output of the other switching device (9) being supplied to the set input of the flip flop.

## Revendications

1. Soupape avec un dispositif de commutation pour déterminer la position de cette soupape, avec un noyau capteur de déplacement (4) mobile en fonction de la position de piston, noyau agissant chaque fois sur une bobine (5, 6) montée sur le tube de pression (2), dans la zone d'influence du noyau capteur de déplacement, le courant de bobine étant mesuré au moyen des bobines (5, 6) commandées par des impulsions et des dispositifs de commutation (9, 10) étant actionnés en fonction de la valeur de mesure, dispositifs dont la différence de temps d'impulsion est obtenue dans un compteur (15) comme mesure de la position de soupape, par comptage des impulsions de synchronisation d'un générateur d'impulsions (16), caractérisée en ce que le générateur d'impulsions (16) est raccordé aussi bien au compteur (15) qu'à un diviseur (17), dont le signal de sortie alimente les bobines (5, 6) avec une fréquence d'impulsion réduite, et en ce que la différence de temps de commutation est amenée au compteur réalisé sous forme de compteur arythmique (15), alors que l'impulsion du générateur d'impulsions (16) est comptée pendant la différence de temps d'impulsion.

2. Soupape selon la revendication 1, caractérisée en ce qu'une résistance (7, 8) est raccordée sur chacune des bobines (5, 6), résistance sur laquelle on peut prélever l'intensité de bobine sous forme de tension.

3. Soupape selon la revendication 2, caractérisée en ce que les dispositifs de commutation sont réalises sous forme de comparateurs (9, 10).

4. Soupape selon l'une des revendications précédentes, caractérisée en ce qu'un élément OU-exclusif (14) est branché en aval des dispositifs de commutation (9, 10).

5. Soupape selon l'une des revendications précédentes, caractérisée en ce que les sorties du dispositif de commutation (9, 10) sont amenées à un dispositif de reconnaissance de la direction (13).

6. Soupape selon la revendication 5, caractérisée en ce que le dispositif de reconnaissance de direction est réalisé sous forme de bascule (13), l'une des sorties du dispositif de commutation (10) étant amenée dynamiquement à l'entrée de synchronisation et la sortie de l'autre dispositif de commutation (9) étant amenée à l'entrée de positionnement de la bascule.